Europäisches Patentamt

(19) European Patent Office    (11) Publication number: **0 026 578**

Office européen des brevets    **A1**

(12)    # EUROPEAN PATENT APPLICATION

(21) Application number: **80302978.4**    (51) Int. Cl.³: **B 61 H 1/00**
                                                **F 16 D 69/04**
(22) Date of filing: **28.08.80**

(30) Priority: **27.09.79 US 79372**

(43) Date of publication of application:
   **08.04.81 Bulletin 81/14**

(84) Designated Contracting States:
   **AT BE CH DE FR GB IT LI LU NL**

(71) Applicant: **ABEX CORPORATION
530 Fifth Avenue
New York New York 10036(US)**

(72) Inventor: **Beetle, Robert H.
344 Morris Avenue
Mountain Lakes New Jersey 07046(US)**

(72) Inventor: **Lloyd, Herbert W.
82 Smith Hill Road
Monsey New York 10952(US)**

(74) Representative: **Allam, Peter Clerk et al,
LLOYD WISE, TREGEAR & CO. Norman House 105-109
Strand
London WC2R 0AE(GB)**

(54) **Railroad brake shoe.**

㊗ Discontinuous metallic segments (26) are supported by a steel back (22) with reinforcements (30,32) in the radial direction, thereby permitting exploitation of a longer wearing shoe (20) which may be brittle.

Fig.1.

EP 0 026 578 A1

## RAILROAD BRAKE SHOE

This invention relates to railroad brake shoes.

For railroad braking, the industry standard for over a century has been a cast iron shoe which in modern times is supported on a curved steel back in turn adapted to be replaceably mounted on a brake head in the standard clasp brake configuration.

As a rule a harder shoe wears longer but unfortunately the brittleness of the shoe usually increases with hardness and one object of the present invention is to permit exploitation of a longer wearing shoe which might be brittle.

The railroad brake shoe in accordance with the present invention comprises a metal back having means for attaching the shoe to a brake head, said back having a predetermined radius of curvature, a plurality of metal reinforcing elements having inner ends secured to and projecting radially from the concave side of said back, and circumferentially separated sections of metallic friction material united to said elements to extend substantially radially therewith, the free ends of the sections constituting the wear face of the shoe and being substantially coterminal with the outer ends of the reinforcing elements.

Embodiments of the railroad brake shoe of the present invention will now be described with reference to the accompanying drawings.

Fig. 1 is a side elevation view of a railroad brake shoe constructed in accordance with one embodiment of the present invention;

Fig. 2 is a top plan view of the shoe shown in Fig. 1;

Fig. 3 is a bottom view of the shoe shown in Fig. 1;

Figs. 4 and 5 are bottom views, similar to Fig. 3, showing other embodiments of the present invention;

Fig. 6 is a top plan view of a shoe which is another embodiment of the invention;

Fig. 7 is a side elevation view of the shoe shown in Fig. 6;

Fig. 8 is a side elevation view of a shoe which is another embodiment of the invention;  and

Fig. 9 is an end view on the line 9-9 of Fig. 8.

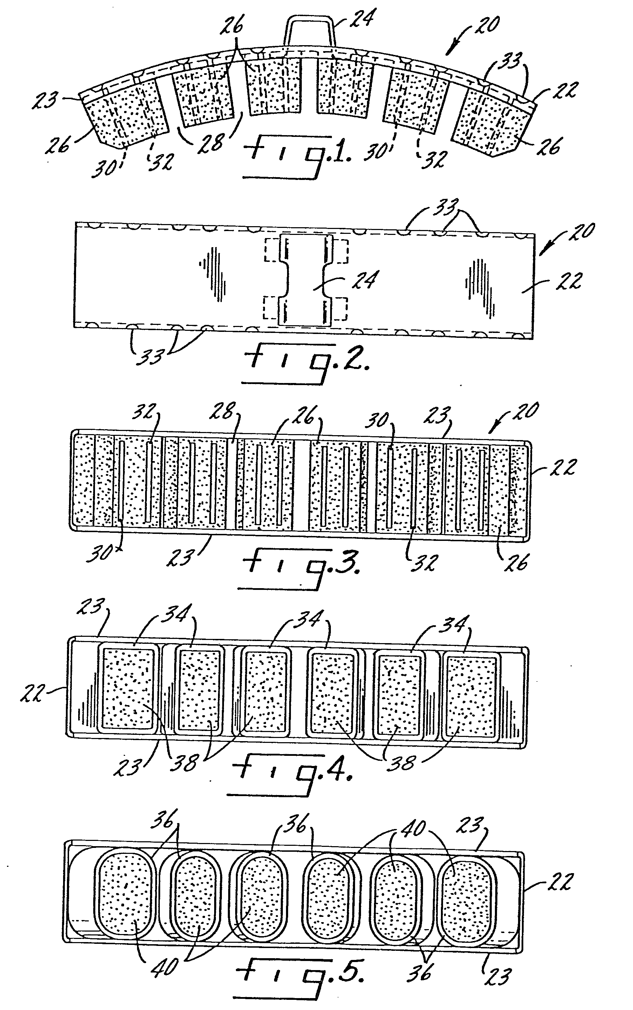

The railroad brake shoe 20, Figs. 1, 2 and 3, includes a curved steel back 22 having downwardly (inwardly) bent side flanges 23 so that the concave side of the back (the one which will be next to the wheel) is of channel shape.   A center attaching lug 24 extends from the convex side of the back and is anchored in place in the metal sections to be mentioned hereinafter. The center attaching lug enables the shoe to be attached to the brake head, not shown.

The preferred, but not essential metal constituting the friction material of the shoe is a somewhat brittle cast iron containing more than five percent of phosphorous, and upwards to nine or ten percent phosphorous depending upon the tolerance for phosphorous in the induction furnace or cupola used to melt the cast iron.

In service the shoe is forced by the brake rigging against the tread of the car wheel and as a result of the friction the wheel and shoe both become hot. The shoe tends to expand and after the brake engagement, cools off. Consequently, the shoe is subjected to thermal stressing to say nothing of the mechanical stressing involved in the course of brake engagement. Because of the stressing, the shoe material is subjected to bending moments both in tension and compression. For example, the ends of the shoe, when hot enough, will flex away from the wheel and then approach the wheel as they cool. If the shoe is of cast iron containing as much as five percent phosphorous the shoe is brittle, and more so as the amount of phosphorous increases. Thus while the amount of sparking due to brake engagement decreases with increasing phosphorous contents (thereby reducing the chances of an accidental fire in rural areas), and while the wear resistance increases with phosphorous content, the shoe becomes proportionally more brittle, and in order to enable the shoe to resist the stressing involved and to conform to the radius of the wheel, the friction material in the brake shoe of the present invention is separated into individual sections, each supported independently of the other.

Thus, in the embodiment shown in Figs. 1 and 3, sections 26 of brittle cast iron (six in number for example) project radially from the concave side of the steel back 22 and are separated circumferentially from one another by intervening spaces 28. To assure the sections are securely anchored to the steel back 22 and are reinforced against brittle failure, spaced reinforcing plates 30 and 32 are paired to each cast iron section, that is, the cast iron is cast onto the reinforcing elements. The reinforcing elements are secured as by welding to the concave side of the steel back 22 so as to project radially therefrom. The steel plates 30 and 32 being welded to the steel back of course are present in the mold, along with the steel back 22, when the cast iron sections are poured. Cores will be placed in the mold to afford the separating spaces 28 between adjacent sections of brittle, cast iron of high phosphorous content.    If desired, the back of the shoe may be provided with openings 33 so that when the cast iron is poured, the cast iron will flow into the openings further to anchor the cast iron sections to the steel back.

The steel reinforcing plates 30 and 32 are entirely embedded in the cast iron but as shown in Fig. 1 the free ends of the reinforcing elements, corresponding to the wear faces (the faces which engage the tread of the car wheel) of the cast iron sections are substantially co-terminal so that the cast iron sections are reinforced throughout the entire length from the shoe back, against which they are cast, to the wear face.

As shown in Figs. 4 and 5, instead of individual reinforcing plates, the reinforcement may be in the form of continuous sleeves, either square corners (34, Fig. 4) or rounded corners (36, Fig. 5) with the cast iron material (38 and 40 respectively) cast therein.    As in the embodiment shown in Fig. 1, the cast iron material and reinforcing steel will wear away together.

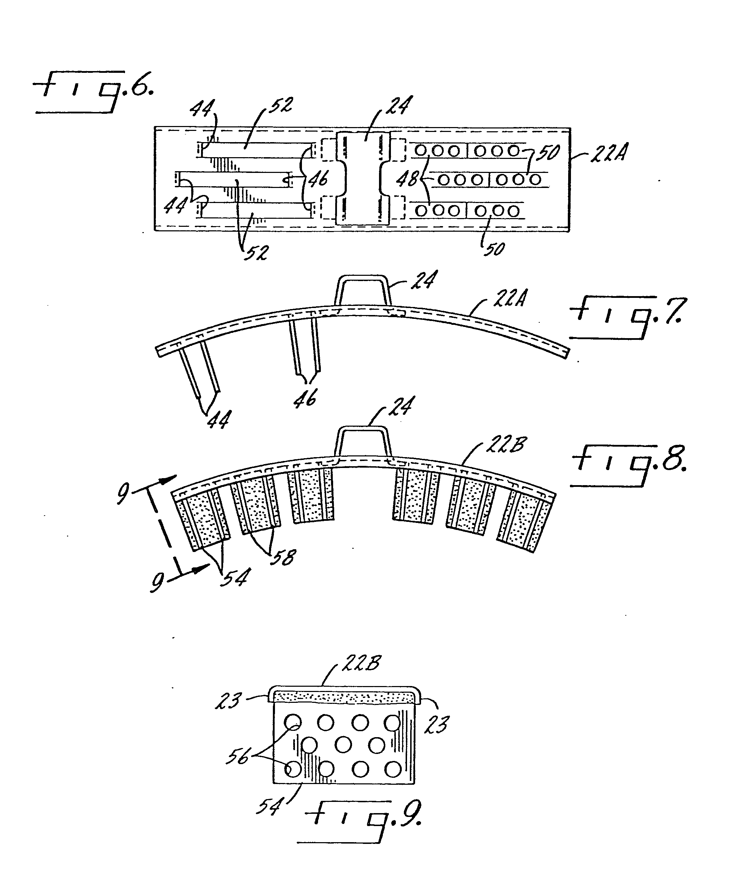

Referring to Fig. 6, the reinforcing elements may be in the form of fingers slit from and bent downward from the steel back itself (steel back 22A) and from what is illustrated in Fig. 6 will be recognised that the shoe back 22A would be supporting four sections of cast iron friction material.    Thus the three fingers 44, the three fingers 46, the three fingers 48 and the three fingers 50 are staggered slightly and themselves would be embedded in the cast iron material cast thereabout in surrounding relation. The slots 52 in the back of the shoe resulting from forming the reinforcing fingers will receive the cast iron material when poured, further assuring that the cast iron material is effectively anchored to the shoe back 22A.

The shoe back 22B shown in Figs. 8 and 9 has a plurality of reinforcing plates 54 welded to and projecting from the concave side thereof being similar to Fig. 1 in that respect, but it will be noted that each plate is perforated with perforations 56 so that the cast iron material may be embedded therein.

More specifically, there are two plates 54 welded to the back 22B in radial relation, each having a plurality of openings 56.    These two plates, 54, will reinforce a single section of brittle cast iron;  the next two plates 58 will reinforce a second section, and so on.    There will be six cast iron sections in all, Fig. 8, resulting in a shoe of the form shown in Fig. 8 where the medial section of the shoe, beneath the center attaching lug 24, is entirely devoid of friction material.    The metal sections, instead of being cast, could be forged, sintered, stamped etc.

0026578

CLAIMS:

1. A railroad brake shoe comprising a metal back having means for attaching the shoe to a brake head, said back having a predetermined radius of curvature, a plurality of metal reinforcing elements having inner ends secured to and projecting radially from the concave side of said back, and circumferentially separated sections of metallic friction material united to said elements to extend substantially radially therewith, the free ends of the sections constituting the wear face of the shoe and being substantially coterminal with the outer ends of the reinforcing elements.

2. A railroad brake shoe according to Claim 1, wherein there are at least two reinforcing elements for each metallic section.

3. A railroad brake shoe according to Claim 2 wherein the reinforcing elements are sleeves containing the metallic friction material.

4. A railroad brake shoe according to any preceding claim wherein the metallic friction material is cast iron containing more than five percent by weight phosphorous.

5. A railroad brake shoe according to any preceding claim, wherein said means for attaching the shoe to a brake head includes a center attaching lug.

LLOYD WISE, TREGEAR & CO.
NORMAN HOUSE 105-109 STRAND

Fig.1.

Fig.2.

Fig.3.

Fig.4.

Fig.5.

fig.6.

fig.7.

fig.8.

fig.9.

0026578

European Patent Office

EUROPEAN SEARCH REPORT

Application number

EP 80 30 2978.4

## DOCUMENTS CONSIDERED TO·BE RELEVANT

| Category | Citation of document with indication, where appropriate, of relevant passages | Relevant to claim |
|---|---|---|
|  | US - A - 2 597 883 (McDONALD et al.)<br>* column 2, lines 25 to 31; fig. 1, 2 *<br>-- | 1-3 |
|  | US - A - 1 749 760 (DUNCAN)<br>* page 2, lines 35 to 41; fig. 1, to 4 *<br>-- | 1,5 |
| A | CH - A - 237 239 (FICHTEL & SACHS)<br>* claim *<br>-- | 4 |
| A | GB - A - 853 544 (BENDIX)<br>---- |  |

### CLASSIFICATION OF THE APPLICATION (Int. Cl 3)

B 61 H   1/00
F 16 D 69/04

### TECHNICAL FIELDS SEARCHED (Int. Cl.3)

B 61 H   1/00
F 16 D 69/00

### CATEGORY OF CITED DOCUMENTS

X: particularly relevant
A: technological background
O: non-written disclosure  .
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 16-12-1980 | LUDWIG |

EPO Form 1503.1  06.78